# EUROPÄISCHE PATENTSCHRIFT

(11) **EP 0 723 747 B1**
(45) Veröffentlichungstag und Bekanntmachung des Hinweises auf die Patenterteilung: **08.11.2000**
(21) Anmeldenummer: 96100115.3
(22) Anmeldetag: 05.01.1996
(51) Int. Cl.: A44B 11/25

(54) **Verschluss für Sicherheitsgurte**
Safety belt buckle
Boucle pour ceinture de sécurité

(30) Priorität: 26.01.1995 DE 19502416
(43) Veröffentlichungstag der Anmeldung: 31.07.1996
(73) Patentinhaber: TRW Occupant Restraint Systems GmbH & Co. KG, 73551 Alfdorf (DE)
(72) Erfinder: Wier, Franz, D-73571 Göggingen (DE)
(74) Vertreter: Degwert, Hartmut, Dipl.-Phys.

(56) Entgegenhaltungen:
- EP-A- 0 212 507
- EP-A- 0 485 656
- DE-A- 4 021 974
- US-A- 5 115 543
- US-A- 5 309 611

## Beschreibung

Die Erfindung betrifft einen Verschluß für Sicherheitsgurte, der für ein Gurtsystem mit einem am Verschluß angreifenden Gurtstraffer geeignet ist.

Aus der DE 39 29 114 A1 ist bereits ein solcher, sogenannter strafferfester Verschluß bekannt, der mit einer Ausgleichsmasse ausgestattet ist, um die bei starker Beschleunigung oder Verzögerung auftretenden Massenkräfte zu kompensieren und so ein unbeabsichtigtes Öffnen des Verschlusses zu verhindern. Die Ausgleichsmasse bildet einen Arm eines am Rahmen des Verschlusses schwenkbar gelagerten Hebels. Mit einem weiteren Arm greift der Hebel an der Lösetaste des Verschlusses an, die an dessen Rahmen verschiebbar geführt ist.

Die EP-A-0 485 656 zeigt ein Schloß für Sicherheitsgurtsysteme, bei der ein selbsttätiges Öffnen durch einen zweiarmigen Hebel verhindert wird, der am lasttragenden Gehäuse schwenkbar gelagert ist. Der Hebel wird bei jeder Betätigung der Lösetaste aus seiner Ruhelage in eine ausgelenkte Stellung verschwenkt. Am Ende einer Rückstrammbewegung ragt einer der Arme des Hebels in die Bewegungsbahn der Lösetaste, um deren Weiterbewegung in Betätigungsrichtung zu verhindern.

Der Erfindung liegt die Aufgabe zugrunde, den Verschluß mit einer großen Sicherheitsreserve auszustatten, um ein Öffnen auch bei größten Beschleunigungen und Verzögerungen sowie unter Berücksichtigung von Toleranzen und Alterung sicher zu verhindern.

Gemäß der Erfindung wird ein Verschluß für Sicherheitsgurte geschaffen, mit einem Riegel, der in einem lasttragenden Rahmen zwischen einer Öffnungsstellung und einer Schließstellung beweglich gelagert ist und in seiner Schließstellung an einer Steckzunge angreift, einer am Rahmen verschiebbar geführten Lösetaste, durch deren Betätigung der Riegel in seine Öffnungsstellung verschiebbar ist, und einer Ausgleichsmasse, die einen Arm eines am Rahmen um eine Achse schwenkbar gelagerten Hebels bildet, wobei der Verschluß dadurch gekennzeichnet ist, daß die Lösetaste zwei Anschläge aufweist, die in Richtung ihrer Verschiebebewegung voneinander beabstandet sind, und der Hebel einen ersten Hebelarm, dessen freies Ende dem ersten Anschlag der Lösetaste gegenüberliegt, sowie einen zweiten Hebelarm aufweist, dessen freies Ende dem zweiten Anschlag der Lösetaste gegenüberliegt, wobei der Schwerpunkt des Hebels und die beiden Hebelarme auf gegenüberliegenden Seiten der Achse angeordnet sind und die Ausgleichsmasse so dimensioniert ist, daß die durch den Hebel erzeugten Sperrkräfte größer sind als die zu überwindenden Massenträgheitskräfte, die an der Lösetaste auftreten.

Bei dieser Lösung ist die Ausgleichsmasse in prinzipiell gleicher Weise sowohl bei Verzögerung als auch bei Beschleunigung des Verschlusses wirksam, und durch die geeignete Dimensionierung und geeignete Wahl ihres Schwerpunkts erfolgt eine Überkompensation der Massenträgheitskräfte. Diese Überkompensation ergibt die angestrebte große Sicherheitsreserve.

Weitere Merkmale und Vorteile der Erfindung ergeben sich aus der folgenden Beschreibung zweier Ausführungsformen und aus der Zeichnung, auf die Bezug genommen wird. In der Zeichnung zeigen:
- Fig. 1: eine schematische Seitenansicht der ersten Ausführungsform des Verschlusses;
- Fig. 2: eine Draufsicht dieses Verschlusses;
- Fig. 3a und 3b: schematische Seitenansichten des Verschlusses zur Erläuterung der Funktionsweise;
- Fig. 4: eine schematische Seitenansicht einer zweiten Ausführungsform; und
- Fig. 5: eine Draufsicht des Verschlusses gemäß dieser zweiten Ausführungsform.

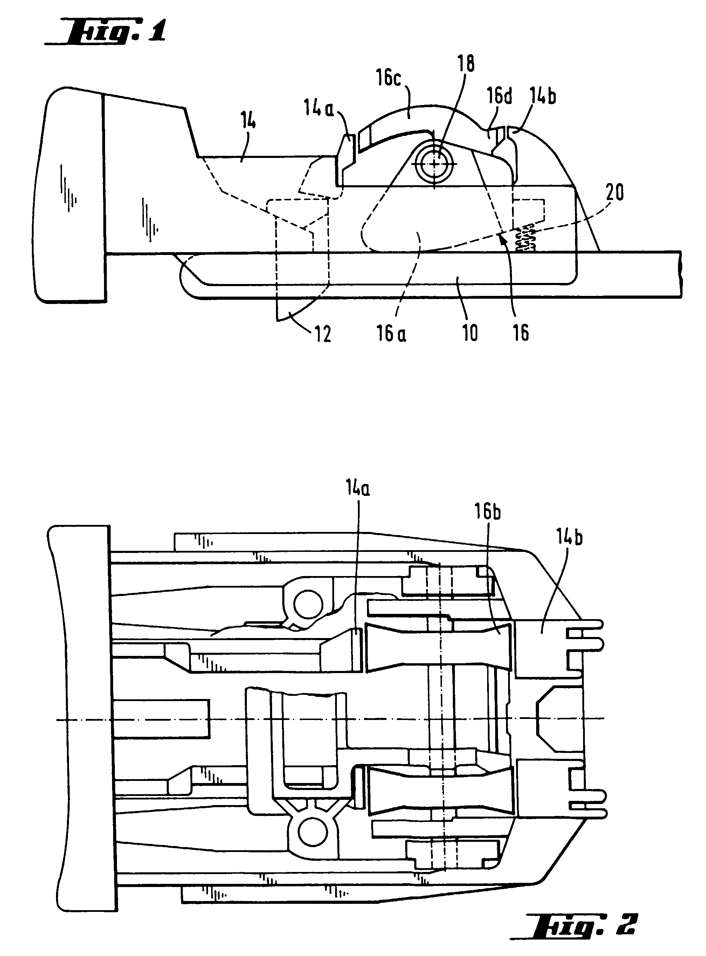

In Fig. 1 sind die Hauptbestandteile eines Verschlusses für Sicherheitsgurte dargestellt. In einem lasttragenden Rahmen 10 ist eine Einsteckbahn für eine Steckzunge gebildet. Quer zu dieser Einsteckbahn ist ein Riegel 12 in dem Rahmen 10 verschiebbar geführt. Der Riegel 12 greift bei eingesteckter Steckzunge durch eine Öffnung in dieser. An dem Rahmen 10 ist ferner eine Lösetaste 14 in Längsrichtung dieses Rahmens verschiebbar geführt, durch deren Betätigung der Riegel 12 in seine Öffnungsstellung verschiebbar ist.

Am Rahmen 10 ist ferner ein Hebel 16 um eine Achse 18 schwenkbar gelagert. Dieser Hebel 16 besteht aus zwei seitlich im Abstand voneinander angeordneten, durch die Achse 18 starr miteinander verbundenen Massekörpern 16a, 16b, die gemeinsam eine Ausgleichsmasse bilden. Der Hebel 16 weist ferner gegenüber den Massekörpern 16a, 16b zwei Hebelarme 16c und 16d auf.

An der Lösetaste 14 sind zwei Anschläge 14a, 14b gebildet, die in Richtung der Verschiebebewegung der Lösetaste voneinander beabstandet sind. Der Abstand ist so bemessen, daß die Anschläge 14a, 14b sich in Längsrichtung des Rahmens 10 beiderseits der freien Enden der Hebelarme 16c, 16d befinden, so daß diese freien Enden den Anschlägen 14a, 14b in geringem Abstand gegenüberliegen.

Durch eine Feder 20 wird der Hebel 16 in die in Fig. 1 gezeigte Ruhestellung belastet.

Durch den Hebel 16 werden die Massenträgheitskräfte kompensiert, die an der Lösetaste 14 bei starker Beschleunigung oder Verzögerung des Verschlusses auftreten, insbesondere beim Vorgang der Gurtstraffung mittels eines Straffers, der am Verschluß angreift und diesen in Richtung zum Fahrzeugboden hin verlagert. Bei normaler Betätigung der Lösetaste 14 stößt der Anschlag 14a gegen das freie Ende des Hebelarmes 16c, wodurch dieser im Uhrzeigersinn verschwenkt wird. Da der hintere Anschlag 14b mit der Lösetaste 14 verlagert wird, stößt das freie Ende des Hebelarmes 16d gegen kein Hindernis; die Lösetaste 14 kann also unbehindert betätigt werden.

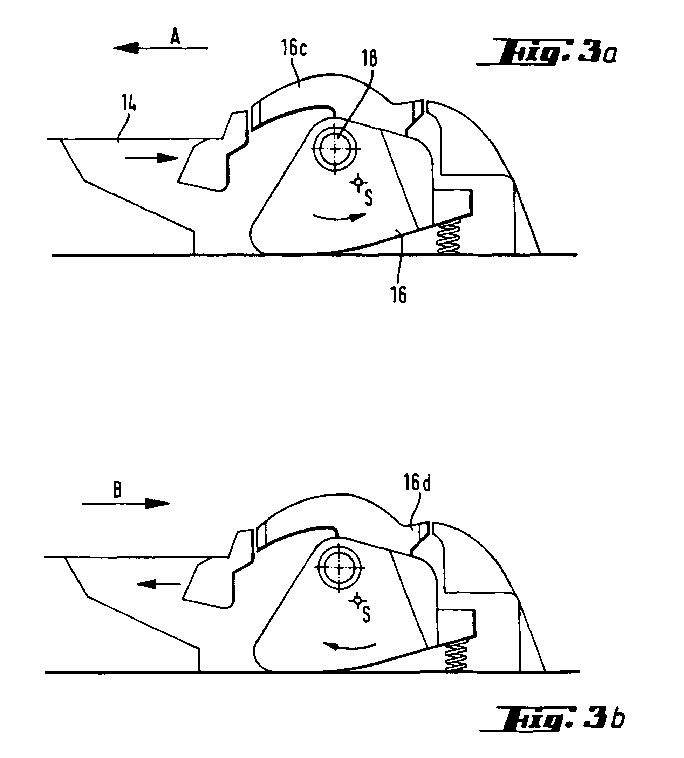

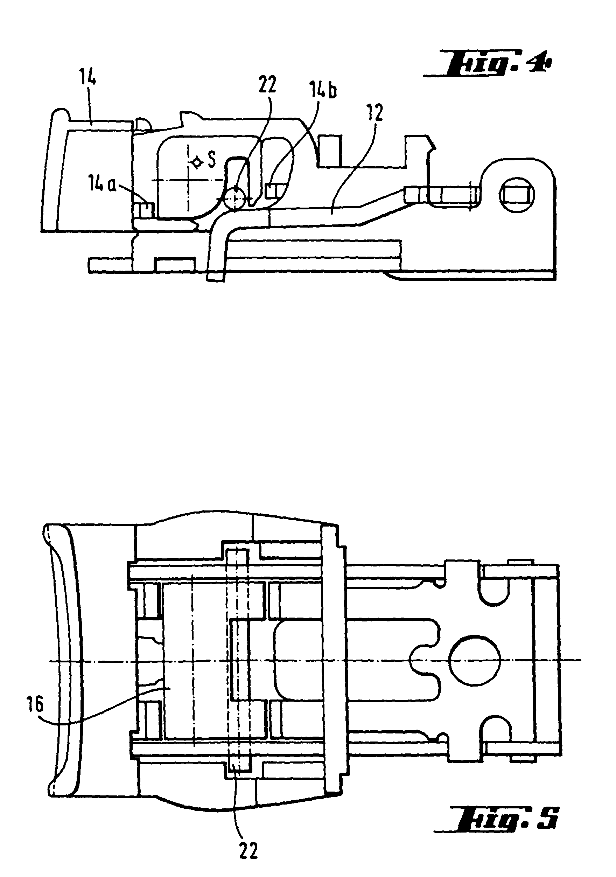

Fig. 3a zeigt schematisch die auftretenden Massenkräfte im Falle einer Beschleunigung des Verschlusses in Richtung eines Pfeiles A. Die Lösetaste 14 ist durch ihre Massenträgheit bestrebt, sich entgegen der Richtung des Pfeiles A zu verlagern. Der Hebel 16 hat insgesamt, d.h. unter Berücksichtigung seiner Hebelarme 16c und 16d sowie der Massenkörper 16a, 16b, einen Schwerpunkt S. Dieser Schwerpunkt liegt unterhalb der Achse 18. Der Hebel 16 ist daher bestrebt, eine Schwenkbewegung entgegen dem Uhrzeigersinn in Fig. 3a auszuführen. Der Hebelarm 16c stößt mit seinem freien Ende gegen den Anschlag 14a, wodurch die Bewegung der Lösetaste 14 entgegen der Richtung des Pfeiles A gesperrt wird.

Bei Beschleunigung in entgegengesetzter Richtung B in Fig. 3b ist der Hebel 16 bestrebt, im Uhrzeigersinn verschwenkt zu werden. Folglich widersetzt sich der Hebel 16 mit seiner Massenträgheit über den Hebelarm 16d, an welchem der Anschlag 14b anstößt, einer Bewegung der Lösetaste 14 entgegengesetzt zur Richtung der Beschleunigung B. Die Lösetaste 14 ist folglich auch blockiert, wenn in der zur Richtung A entgegengesetzten Richtung B hohe Beschleunigungen auftreten. Durch geeignete Dimensionierung der Massekörper 16a, 16b unter Berücksichtigung der Lage des Schwerpunktes S kann eine Überkompensation erreicht werden, so daß die durch den Hebel 16 erzeugten Sperrkräfte größer sind als die zu überwindenden Massenträgheitskräfte, die an der Lösetaste 14 auftreten.

Auch bei der in den Figuren 4 und 5 gezeigten zweiten Ausführungsform ist am Rahmen 10 des Verschlusses ein schwenkbarer Riegel 12 gelagert. Durch ein stiftförmiges Sperrelement 22, das in einer Ebene parallel zur Einsteckbahn des Rahmens 10 verschiebbar geführt ist, wird der schwenkbare Riegel 12 selektiv in seiner Schließstellung gehalten oder aber freigegeben. Abgesehen von dieser indirekten Sperrung des Riegels 12 entspricht dieser Verschluß dem bezüglich der ersten Ausführungsform beschriebenen Verschluß, und die Wirkungsweise ist analog zu der bei der zuvor beschriebenen Ausführungsform.

## Patentansprüche

1. Verschluß für Sicherheitsgurte, mit einem Riegel (12), der in einem lasttragenden Rahmen (10) zwischen einer Öffnungsstellung und einer Schließstellung beweglich gelagert ist und in seiner Schließstellung an einer Steckzunge angreift, einer am Rahmen verschiebbar geführten Lösetaste (14), durch deren Betätigung der Riegel in seine Öffnungsstellung verschiebbar ist, und einer Ausgleichsmasse, die einen Arm eines am Rahmen um eine Achse (18) schwenkbar gelagerten Hebels (16) bildet, dadurch gekennzeichnet, daß die Lösetaste (14) zwei Anschläge (14a, 14b) aufweist, die in Richtung ihrer Verschiebebewegung voneinander beabstandet sind, und der Hebel (16) einen ersten Hebelarm (16c), dessen freies Ende dem ersten Anschlag (14a) der Lösetaste gegenüberliegt, sowie einen zweiten Hebelarm (16d) aufweist, dessen freies Ende dem zweiten Anschlag (14b) der Lösetaste gegenüberliegt, wobei der Schwerpunkt des Hebels (16) und die beiden Hebelarme (16c, 16d) auf gegenüberliegenden Seiten der Achse (18) angeordnet sind und die Ausgleichsmasse so dimensioniert ist, daß die durch den Hebel (16) erzeugten Sperrkräfte größer sind als die zu überwindenden Massenträgheitskräfte, die an der Lösetaste (14) auftreten.

2. Verschluß nach Anspruch 1, dadurch gekennzeichnet, daß die Ausgleichsmasse auf zwei parallele, durch die Schwenkachse des Hebels miteinander verbundene Arme (16a, 16b) verteilt ist.

3. Verschluß nach einem der vorstehenden Ansprüche, dadurch gekennzeichnet, daß der Hebel durch eine Feder (20) in eine Ruhestellung belastet ist.

## Claims

1. A buckle for safety belts, comprising a latch (12) which is movably mounted in a load-bearing frame (10) between an opened position and a closed position and which in its closed position engages an insert tongue, a release button (14) which is slideably guided on the frame and whose actuation allows the latch to be displaced into its open position, and a compensating mass which forms one arm of a lever (16) mounted on the frame so as to pivot about an axle (18), characterized in that the release button (14) has two stops (14, 14b) which are spaced from each other in the direction of their sliding movement, and that the lever (16) has a first lever arm (16c), the free end of which is located opposite the first stop (14a) of the release button, and a second lever arm (16d), the free end of which is located opposite the second stop (14b) of the release button, the center of gravity of the lever (16) and the two lever arms (16c, 16d) being arranged on opposite sides of the axle (18) and the compensating mass being dimensioned such that the locking forces caused by the lever (16) are greater than the inertial forces occurring at the release button (14) and which are to be overcome.

2. The buckle according to claim 1, characterized in that the compensating mass is distributed to two parallel arms (16a, 16b) connected to each other through the pivot axle of the lever.

3. The buckle according to any one of the preceding claims, characterized in that the lever is biased into an initial position by a spring (20).

## Revendications

1. Fermeture pour ceinture de sécurité, avec un verrou (12), qui est monté de façon mobile dans un cadre (10) supportant la charge entre une position d'ouverture et une position de fermeture et qui vient en prise avec une languette d'enfilage dans sa position de fermeture, un poussoir de libération (14), guidé de façon à pouvoir coulisser sur le cadre et par l'actionnement duquel on peut faire coulisser le verrou dans sa position d'ouverture, et une masse d'équilibrage qui forme le bras d'un levier (16), monté de façon à pouvoir pivoter autour d'un axe (18), fermeture caractérisée en ce que le poussoir de libération (14) présente deux butées (14a, 14b), qui sont montées à une distance l'une de l'autre dans le sens de son mouvement de fermeture, et en ce que le levier (16) présente un premier bras de levier (16c), dont l'extrémité libre se trouve en regard de la première butée (14a) du poussoir de libération, et un second bras de levier (16d), dont l'extrémité libre se trouve en regard de la seconde butée (14b) du poussoir de libération, le centre de gravité du levier (16) et les deux bras de levier (16c, 16d) étant disposés sur des côtés opposés de l'axe (18) et la masse d'équilibrage ayant des dimensions telles que les forces de blocage engendrées par le levier sont supérieures aux forces d'inertie de masse à surmonter, apparaissant au niveau du poussoir de libération (14).

2. Fermeture selon la revendication 1, caractérisée en ce que la masse d'équilibrage est répartie sur deux bras (16a, 16b) parallèles, reliés l'un à l'autre par l'axe de pivotement du levier.

3. Fermeture selon l'une des revendications précédentes, caractérisés en ce que le levier est poussé par un ressort (20) dans une position de repos.
